# EUROPEAN PATENT SPECIFICATION

(11) **EP 0 778 116 B1**
(45) Date of publication and mention of the grant of the patent: **03.04.2002**
(21) Application number: 96308697.0
(22) Date of filing: 02.12.1996
(51) Int. Cl.: B29C 45/02

(54) **Resin molding machine**
Harzformmaschine
Machine pour le moulage de résine

(30) Priority: 05.12.1995 JP 31639695; 05.12.1995 JP 31640995
(43) Date of publication of application: 11.06.1997
(73) Proprietor: APIC YAMADA CORPORATION, Hanishina-gun, Nagano 389-08 (JP)
(72) Inventor: Oya, Hidetoshi, c/o Apic Yamada Corporation, Hanishina-gun, Nagano 389-08 (JP); Hirano, Junji, c/o Apic Yamada Corporation, Hanishina-gun, Nagano 389-08 (JP); Yanagisawa, Makoto, c/o Apic Yamada Corporation, Hanishina-gun, Nagano 389-08 (JP)
(74) Representative: Sanderson, Michael John

(56) References cited:
- EP-A- 0 633 111
- GB-A- 2 189 182
- US-A- 4 755 124
- US-A- 5 413 471
- PATENT ABSTRACTS OF JAPAN vol. 18, no. 25 (M-1542), 14 January 1994 & JP 05 261753 A (MATSUSHITA ELECTRIC IND CO LTD), 12 October 1993,
- PATENT ABSTRACTS OF JAPAN vol. 18, no. 65 (M-1554), 3 February 1994 & JP 05 285978 A (APITSUKU YAMADA KK), 2 November 1993,

## Description

The present invention relates to a resin molding machine.

In a conventional resin molding machine which is used for manufacturing semiconductor devices, the semiconductor devices are automatically molded with resin by a transfer molding method. In the transfer molding method, semiconductor devices (members to be molded) are clamped by molding dies, then melted resin in pots is exerted by plungers so as to fill the melted resin in cavities. The plungers exerts the melted resin with high pressure, so the molding dies clamping the members to be molded are closed by a press mechanism, which includes a clamping mechanism, with pressure greater than the resin pressure. Thus, the greater clamping force of the press mechanism is usually generated by a hydraulic system.

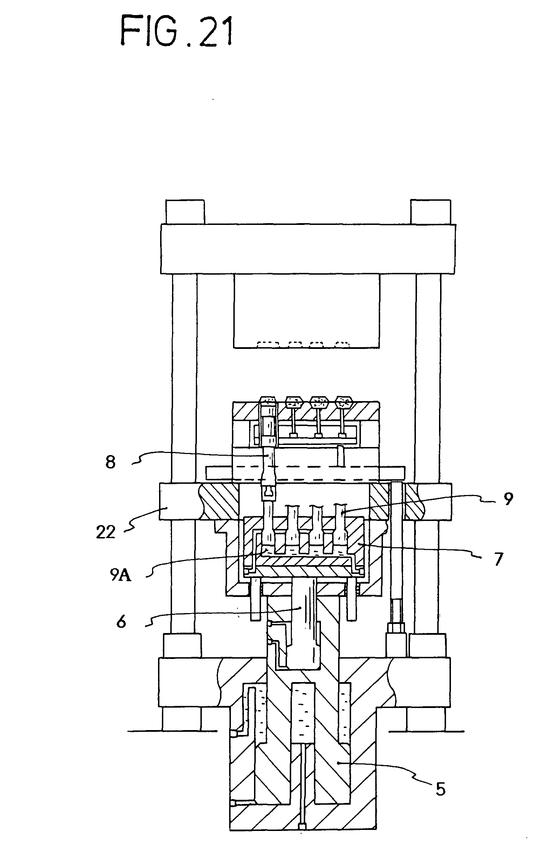

A conventional resin molding machine, which includes the hydraulic system for driving the clamping mechanism and a transferring mechanism, is shown in Fig. 21. The hydraulic system includes: a clamping piston 5 for clamping molding dies; a transferring piston 6 for exerting the melted resin; and a pressure equalizing unit 7. In the multi-pot type resin molding machine, if resin amount in each pot is not equal, the resin pressure in each pot is not equal, either. By the uneven resin pressure in the pots, cavities cannot be filled similarly. If the resin pressure is too low, some cavities cannot be filled with the resin; if the resin pressure is too high, resin flashes are formed. To equalize the resin pressure in all of the pots, the pressure equalizing unit is provided. There are provided piston rods 9, each of which supports each plunger 8 in each pot, in the pressure equalizing unit 7. Each piston rod 9 is vertically movably provided in each cylinder 9A. Oil chambers in the cylinders 9A are mutually communicated, so that all of the piston rods 9 can be pushed with the same pressure.

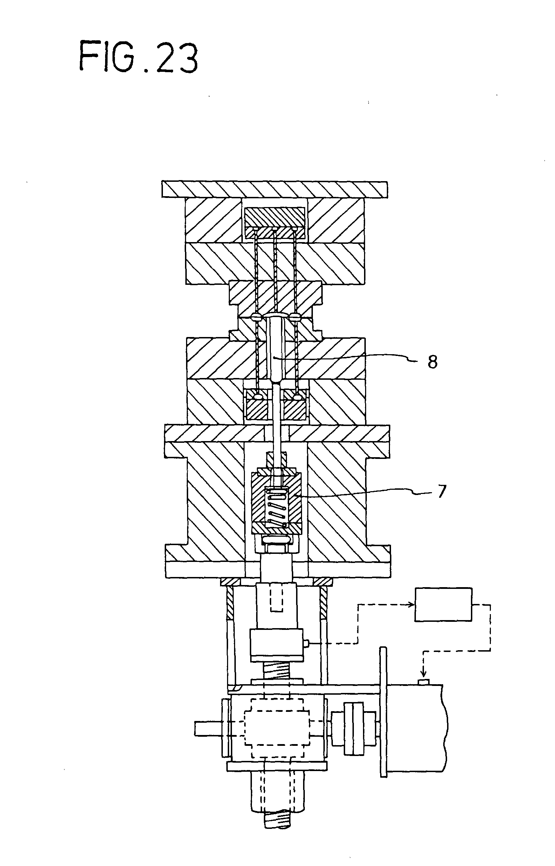

These days fine semiconductor devices have been required, so they are molded in a clean room, e.g., Class 1000, so the clamping mechanism is driven by an electric drive system instead of the hydraulic system. In the conventional molding machine having the electric drive system, an upper die or a lower die of the molding dies is moved to clamp the members to be molded. An example of the conventional molding machine, whose lower die is moved by the electric drive system, is shown in Fig. 22. Note that, this molding machine has been disclosed in Japanese Utility Model Kokai Gazette No. 5-84766.

By employing the electric drive system, the working environment can be kept clean. And speed of filling the melted resin can be easily controlled as compared with the hydraulic system, so that manufacturing accuracy can be improved.

Further, an example of the conventional molding machine, which does not includes the hydraulic system and which employs a spring as the pressure equalizing unit 7, is shown in Fig. 23. Note that, this molding machine has been disclosed in Japanese Utility Model Kokai Gazette No. 1-46028. However, if amount of resin tablet in each pot is not equal, the resin pressure in each pot cannot be equal, so that some cavities cannot be fully filled, and resin flashes are formed in some molded products.

The spring of the pressure equalizing unit will be weakened, but the hydraulic pressure equalizing unit will not be weakened and can absorb the pressure difference, which is caused by the uneven amount of the resin tablet. Further, the hydraulic pressure equalizing unit can change the resin pressure a plurality of times in one molding cycle, so that wire deformation of the semiconductor devices can be prevented, and the resin pressure can be properly controlled according to resin and/or products.

In the conventional multi-pot type transfer molding machine, however, the pressure equalizing unit must be changed according to molding dies when molding conditions, e.g., number of pots, pot pitch, of the molding dies are changed. Especially, it is troublesome for the hydraulic-drive molding machine to change the pressure equalizing unit including a cleaning step, which takes a long time.

As described above, it is important for resin molding machines to properly control the resin pressure so as to manufacture good molded products. And it is also important to completely remove the molded products from the molding die after molding. These days some kinds of resin molded semiconductor devices have very thin molded sections, so they must be properly removed from the molding die so as not to manufacture bad products.

The resin molded semiconductor products must have good quality, and they must be mass-produced. To efficiently mass-produce the semiconductor devices, the lower plunger type molding machines, whose plungers are provided in the lower die of the molding dies, have been used. If the plungers are provided in the upper die, the plungers must be pulled out upward for each resin feeding step, so air is apt to invade into the pots. By the air invading into the pots, voids are formed in some moulded product. Further, the plungers are cooled by pulling out from the pots, so the moulding cycle time cannot be shortened.

Reference is also made to US 5 413 471 which discloses a resin moulding machine according to the pre-characterising section of claim 1.

The present invention has been invented to solve the above described problems of the conventional resin moulding machines.

According to the present invention there is provided a resin moulding machine comprising:
a clamping mechanism including an upper die and a lower die, the lower die being movable to clamp a member to be moulded;
plungers acting on melted resin in pots to feed said resin when said member is moulded, the pots being formed in the lower die;
a plunger driving mechanism for moving the plungers from a lower position to a higher position to feed the melted resin;
a pressure equalizing unit whereby the same pressure is applied to each of said plungers;
an electric motor driving said clamping mechanism and said plunger driving mechanism, and
for each pot, one or more ejector pins for ejecting the moulded member;
characterised in that:
the pressure equalizing unit is controlled by a hydraulic system;
the plungers and the ejector pins are driven such that, subsequent to moulding, the plungers are lowered from their higher positions to disengage from the solidified resin cull in the pots, and thereafter the plungers and ejector pins are simultaneously raised whereby the moulded members and the resin cull are ejected from the lower die and from the pots; and
an unloader is provided for entering the space between the upper die and the lower die subsequent to moulding and arranged to press down on the moulded members as they are ejected by the ejector pins and the plungers.

In the resin moulding machine, the clamping mechanism may include a toggle mechanism which connects a base with a movable platen.

In the resin moulding machine, the toggle mechanism may include:
a rotatable screw shaft extending vertically from the centre of the base;
a nut screwed on the screw shaft;
a link mechanism connecting the base with the movable platen through engagement with the nut; and
an electric motor for rotating the screw shaft about its central axis.

In the resin moulding machine, the link mechanism may include:
a first link piece one end of which is engaged with said nut;
a second link piece one end of which is pivotably connected to the base; and
a third link piece one end of which is pivotably connected to the movable platen,
wherein the other end of the second link piece is pivotably connected to the other end of the third link piece, and the other end of the first link piece is pivotably connected to the second link piece at a position intermediate the length of the second link piece.

In the resin moulding machine, the plunger driving mechanism may include:
a screw shaft holding the pressure equalizing unit, which is provided under the pots of the lower die;
a nut screwed on said screw shaft; and
an electric motor for rotating said nut whereby the screw shaft is moved vertically.

In the resin moulding machine, the clamping mechanism may further include a movable platen wherein:
the movable platen has a unit hole therein which opens in a side face of the movable platen to enable the pressure equalizing unit to move vertically when the member is moulded, the pressure equalising unit being located in the unit hole and held therein by the plunger driving mechanism;
the pressure equalizing unit is movable in the unit hole in the longitudinal direction thereof, and
the pressure equalizing unit can be pulled out via the open end of the unit hole.

In the resin moulding machine, the plunger driving mechanism may include a unit plate for locating the pressure equalizing unit longitudinally in the unit hole;
the pressure equalizing unit is slidably engaged with the unit plate to enable movement of the pressure equalizing unit longitudinally of the unit hole, and
the pressure equalizing unit can be engaged with and disengaged from the unit plate via the open end of the unit hole.

In the resin moulding machine, the pressure equalizing unit may include a unit block having a plurality of cylinders in each of which is provided a movable piston head, which corresponds to each plunger, and
wherein said unit block communicates with said hydraulic system, whereby oil chambers of all the cylinders are mutually interconnected.

In the resin moulding machine, the unit block may incorporate an adjusting piston capable of adjusting the pressure of oil supplied to the piston heads.

The resin moulding machine may further comprise:
a fixing bracket provided in a front end section of the unit plate; and
a communicating bracket provided in a front end section of the unit block, said communicating bracket communicating with the hydraulic system,
wherein a position of said communicating bracket with respect to said fixing bracket is defined to define a position of said pressure equalizing unit.

In the resin moulding machine, upper end sections of the piston heads may be respectively capable of keying with lower end sections of the plungers by rotating the plungers about their own axes.

Embodiments of the present invention will now be described by way of examples and with reference to the accompanying drawings, in which:
Fig. 1 is a plan view of a resin molding machine of an embodiment of the present invention;
Fig. 2 is a front view of a press mechanism of the resin molding machine;
Fig. 3 is a right side view of the press mechanism;
Fig. 4 is a front view of a clamping mechanism of the press mechanism;
Fig. 5 is a side view of the clamping mechanism;
Fig. 6 is a plan view of the clamping mechanism and a plunger driving mechanism;
Fig. 7 is a front sectional view of the plunger driving mechanism;
Fig. 8 is a side sectional view of the plunger driving mechanism;
Fig. 9 is a sectional view of an pressure equalizing unit;
Fig. 10 is a perspective view of the pressure equalizing unit which is attached to a unit plate;
Fig. 11 is an exploded perspective view of the pressure equalizing unit, the unit plate, etc.;
Fig. 12 is a sectional view showing an inner structure of the pressure equalizing unit;
Fig. 13 is a plan view of the pressure equalizing units, which are attached in a movable platen;
Fig. 14 is a side view of the pressure equalizing units, which are attached in the movable platen;
Fig. 15 is a sectional view showing the inner structure of the pressure equalizing unit;
Fig. 16 is a sectional view showing a step of ejecting molded products and a cull from a molding die;
Fig. 17 is a sectional view showing the step of ejecting the molded products and the cull from the molding die;
Fig. 18 is a partial sectional view of an exchanging mechanism of the pressure equalizing units of a hydraulic molding machine;
Fig. 19 is a partial sectional view of the pressure equalizing unit, which is connected with a joint block;
Fig. 20 is a plan view of the pressure equalizing units, which is attached to a unit block;
Fig. 21 is the sectional view of the conventional hydraulic molding machine;
Fig. 22 is the partial sectional view of the conventional molding machine having the movable lower die; and
Fig. 23 is the sectional view of the spring pressure equalizing unit.

Preferred embodiments of the present invention will now be described in detail with reference to the accompanying drawings.

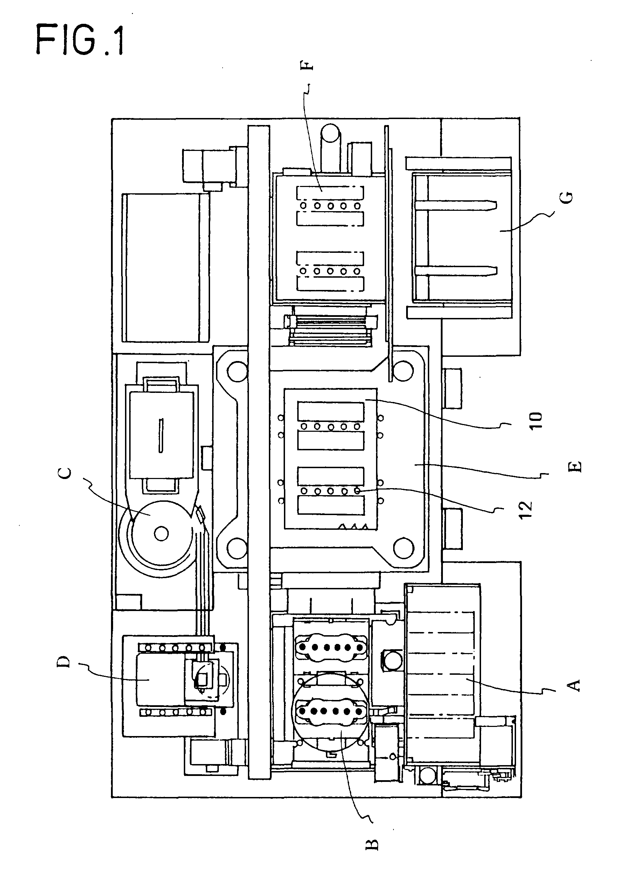

Fig. 1 shows a transfer molding machine, which is capable of molding lead frames, which is an example of members to be molded, of semiconductor devices and which has an electric press mechanism. The machine is a lower multi-plunger type resin molding machine, namely a plurality of plungers for exerting melted resin are provided in a lower die. The resin molding machine is capable of automatically setting the lead frames on which semiconductor chips have been mounted, supplying resin tablet and molding the lead frames with the resin melted.

In Fig. 1, the lead frames on which the semiconductor chips have been mounted are fed in a section A; a pair of lead frames are arranged parallel in a section B; the resin tablets are supplied in a section C; the resin tablets are linearly arranged in a section D; the lead frames are molded in a section E; disused resin, e.g., molded gates, are removed (degated) from the molded lead frames in a section F; and the molded lead frames are arranged and accommodated in a section G.

In the resin molding machine of the present embodiment, the electric press mechanism, which is driven by a servo motor, including a clamping mechanism, which clamps the lead frames, is provided in the section E. Molding dies 10 has a lower die 10a and an upper die 10b. Pots 12 are provided in the lower die 10a. A couple of lines of the pots 12 are arranged parallel, so four lead frames can be molded in one molding cycle.

The lead frames and the resin tablets are set in the molding dies 10 by the steps of: chucking the lead frames and the resin tablets, which are located in the section B, by an inloader; conveying the inloader to a position above the lower die 10a; mounting the lead frames in setting positions on the lower die 10a; and setting the resin tablets in the pots 12 respectively. In the section B, the arrangement of the resin tablets is equal to that of the pots 12 in the lower die 10a; the arrangement of the lead frames is equal to the setting positions thereon.

After setting the lead frames and the resin tablets, the lead frames are clamped by the lower die 10a and the upper die 10b, then the resin which is melted in the pots 12 is filled in cavities, which are formed in the molding dies 10, by the plungers so as to mold the lead frames. After molding, the molding dies 10 are opened, then an unloader enters a space between the lower die 10a and the upper die 10b from the section F side until reaching the position above the lower die 10a. The unloader chucks the molded products and returns to the section F to degate the disused resin. Finally, the molded products are accommodated in the section G.

As described above, the lead frames are fed in the section A, the resin tablets are supplied in the section C, so the lead frames can be automatically and continuously molded with the resin.

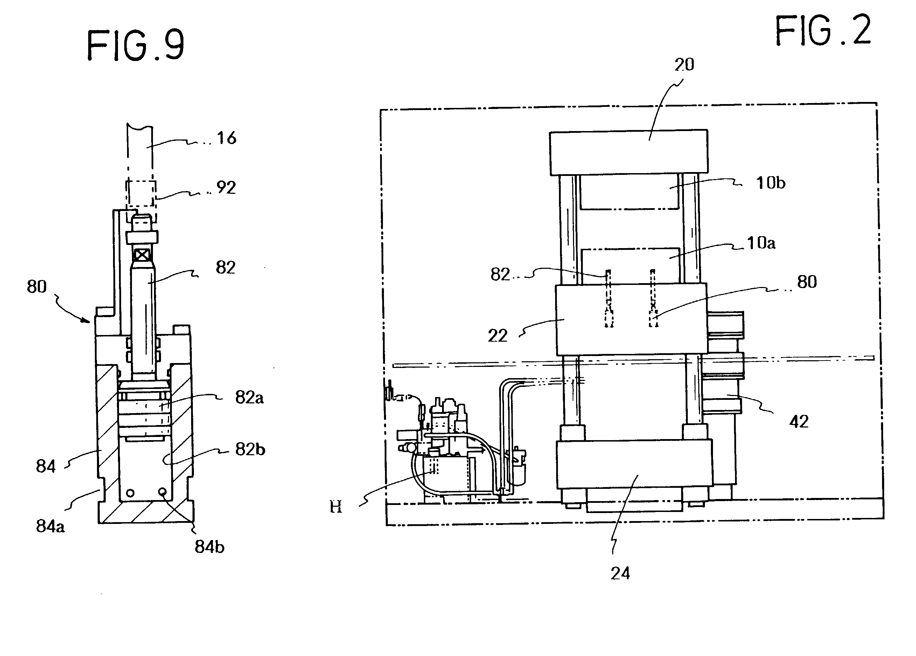

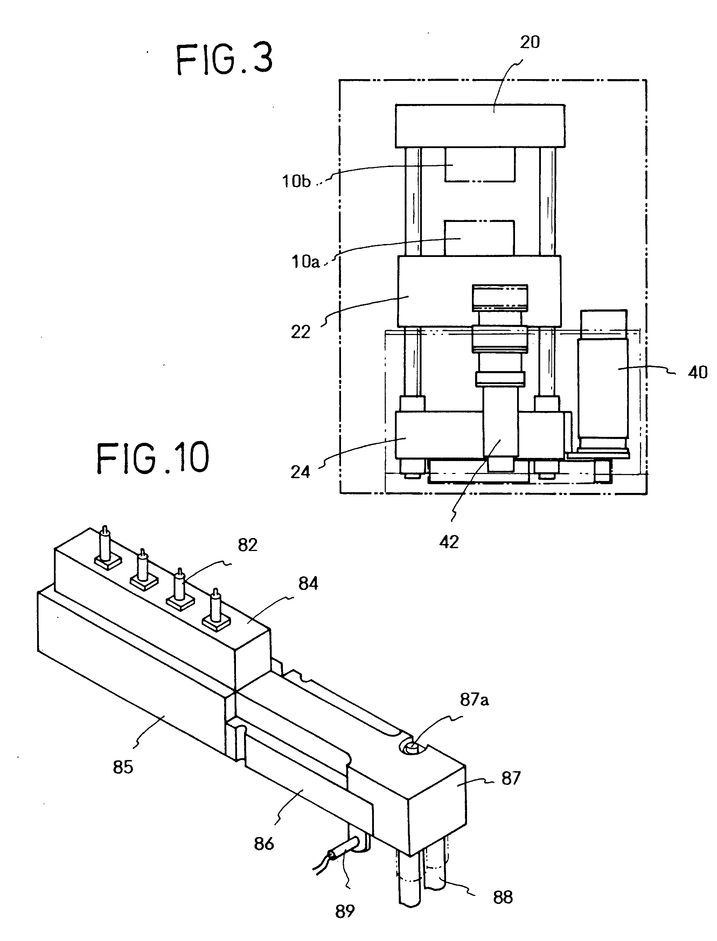

Fig. 2 is the front view of the electric press mechanism in the section E; Fig. 3 is the right side view thereof.

In the press mechanism, an upper platen 20 is fixed; a lower platen 22 is a movable platen. The press mechanism has a base 24. The upper die 10b is fixed to the upper platen 20; the lower platen 10a is fixed to the movable (lower) platen 22. Pressure equalizing units 80 are capable of equalizing resin pressure of the melted resin, which is sent from each pot 12. Each pressure equalizing unit 80 has: a plurality of cylinders; a plurality of piston heads, each of which is slidably provided in the cylinder and each of which has a piston rod 82; and an oil communicating path capable of mutually communicating the cylinders. In Fig. 2, the piston rods 82 are extended upward. A hydraulic system H is connected with the pressure equalizing units 80.

In Fig. 3, a servo motor 40 moves the movable platen 22 in the vertical direction; a servo motor 42 moves the plungers. The servo motor 40 for clamping the molding dies 10 is provided on the rear side of the press mechanism; the servo motor 42 for driving the plungers is provided on the right side of the press mechanism.

In the present embodiment, the electric motors 40 and 42 are employed in the clamping mechanism and plunger driving mechanisms. And oil pressure (hydraulic force) is used for the pressure equalizing units 80.

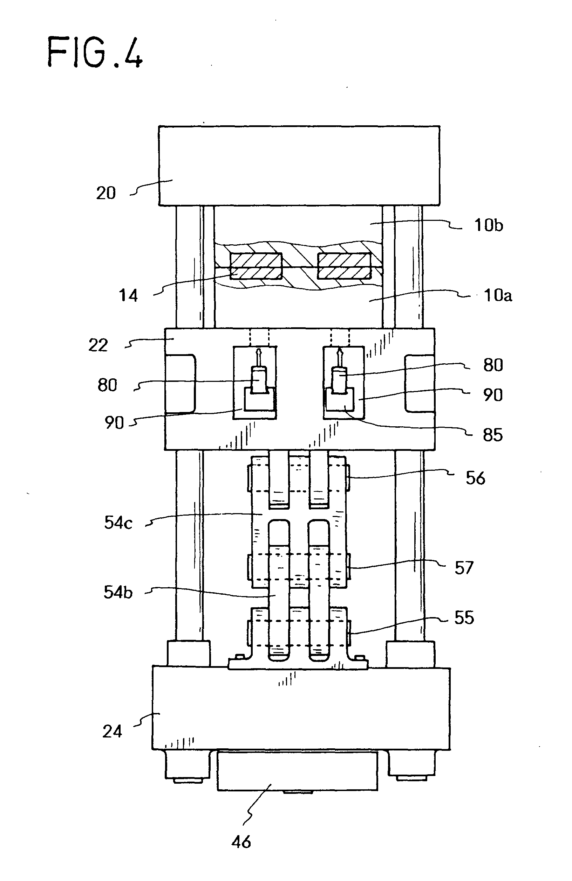

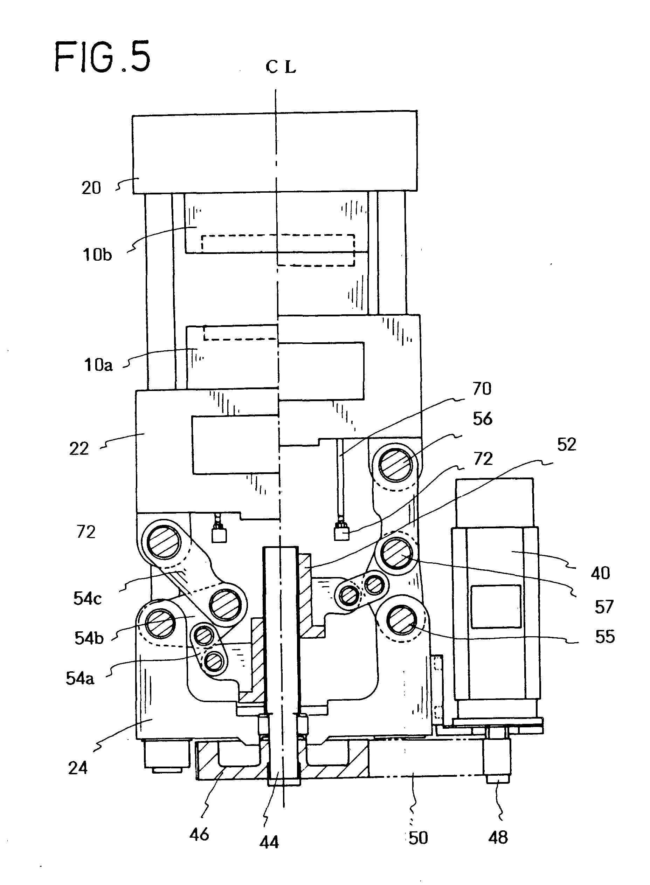

The clamping mechanism of the press mechanism is shown in Figs. 4 and 5. Fig. 4 is the front view of the press mechanism; Fig. 5 is the side view thereof. In Fig. 5, an opening state of the molding dies 10 is shown on the left side of a center line CL; a clamping state of the molding dies 10 is shown on the right side thereof. Fig. 4 shows the clamping state. In the present embodiment, the base 24 and the movable platen 22 are connected by a toggle mechanism, and the toggle mechanism is driven by the servo motor 40 so as to open and close the molding dies 10.

As shown in Fig. 5, a screw shaft 44 is rotatably and vertically provided at a center of the base 24 is connected with the servo motor 40 by engaging a belt 50 between a pulley 46, which is fixed to a lower end of the screw shaft 44, and an output shaft 48 of the servo motor 40. A nut 52 is screwed with the screw shaft 44, so the nut 52 can be vertically moved by rotating the screw shaft 44 on its own axis. A link mechanism, which connects the base 24 with the movable platen 22, engages with the nut 52. With this structure, the movable platen 22 is vertically moved with the vertical movement of the nut 52, so that the molding dies 10 can be opened and closed.

In the present embodiment, the link mechanism connecting the base 24 and the movable platen 22 comprises a first link piece 54a, a second link piece 54b and a third link piece 54c. In Fig. 4, two sets of the link mechanisms (the link pieces 54a, 54b and 54c) which are arranged parallel are seen; in Fig. 5, two sets of the link mechanisms which are arranged symmetry are seen. Namely, four sets of the link mechanisms are provided.

One end of the second link piece 54b is pivotably connected with the base 24 by a shaft 55; one end of the third link piece 54c is pivotably connected with the movable platen 22 by a shaft 56; the other end of the second link piece 54b and the other end of the third link piece 54c are mutually pivotably connected by a shaft 57. With this structure, the second link piece 54b and the third link piece 54c can be pivoted about the shaft 57.

One end of the first link piece 54a is engaged with the nut 52; the other end thereof is pivotably connected with the second link piece 54b. The other end of the first link piece 54a is pivotably connected at a mid position between the shafts 55 and 57. The first link piece 54a transmits driving force, which is generated by moving the nut 52 in the vertical direction, to the second link piece 54b and the third link piece 54c. With this structure, the nut 52 and the link pieces 54a, 54b and 54c are driven by rotating the screw shaft 44 by the servo motor 40, so that the movable platen 22 can be vertically moved to open and close the molding dies 10.

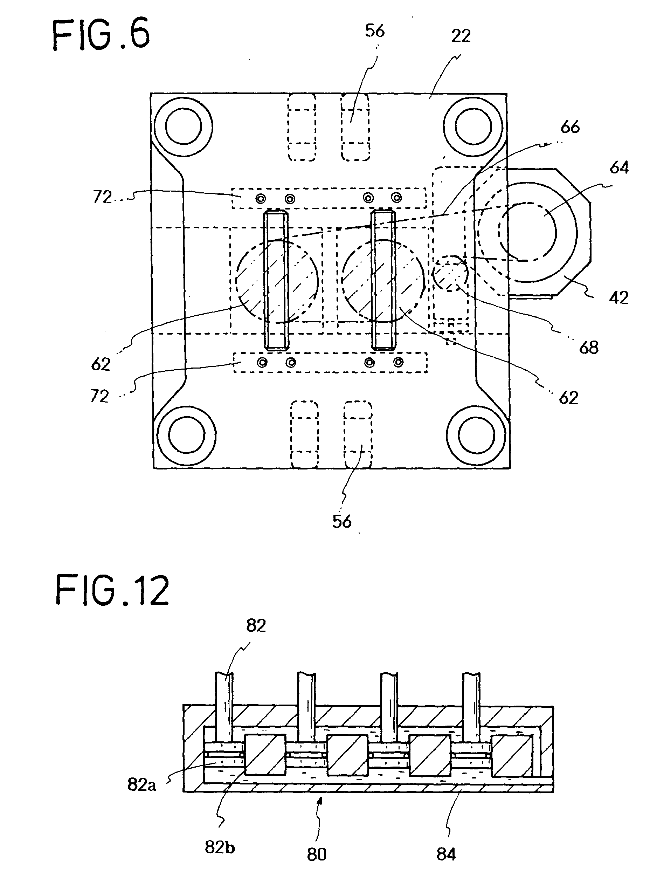

Fig. 6 is the plan view of the movable platen 22. The link mechanisms support and push center parts, in the width direction, of the movable platen 22, so the clamping force can be evenly applied to right chases (molding sections) and left chases (molding sections), which have been assembled in the molding dies 10, and the lead frames can be securely clamped while molding.

In the present embodiment, the toggle mechanism is employed, so even if the toggle mechanism is driven by a small motor, greater clamping force can be gained. Further, high speed clamping can be executed without accelerating the motor. The resin molding machine can be compacted in size. The clamping mechanism pushes end sections of the movable platen 22, so a main driving mechanism for driving the movable platen 22 can be provided under the center part of the movable platen 22.

Rod plates 72 are fixed at a prescribed height by supporting members, which are vertically fixed to the base 24.

Note that, a screw press mechanism driven by an electric motor has been disclosed in Japanese Utility Model Kokai Gazette No. 1-46208. The screw press mechanism has following advantages: molding dies can be opened with high positioning accuracy; fixed clamping force can be gained without reference to height of a movable platen; and greater clamping force can be gained. On the other hand, the screw press mechanism has following disadvantages: the molding dies cannot be moved at high speed; a high power motor must be employed; a screw section is apt to be abraded by the greater force; and the movable platen is pushed at one point, so the clamping force cannot be evenly applied to the movable platen.

In the molding machine, which employs the toggle mechanism, the clamping force is changed according to the height of the movable platen. But, in the present embodiment, thickness of the molding dies 10, which are attached to the movable platen 22, is designed to be common to all products, and the height of the movable platen 22 in the clamping state is fixed for all products. Namely, the clamping position of the movable platen 22 is not changed even if the molded products are changed, so that the clamping mechanism can always gain fixed clamping force with the toggle mechanism.

In the clamping mechanism of the electric driven press mechanism, data of the clamping force generated by the servo motor, which can be detected by a sensor, e.g., a load cell sensor, may be fed back to the servo motor, so that clamping speed and the clamping force can be properly controlled.

As described above, the servo motor 40 is used for opening and closing the molding dies 10; the servo motor 42 is used for sending the melted resin from the pots to the cavities after clamping the members to be molded.

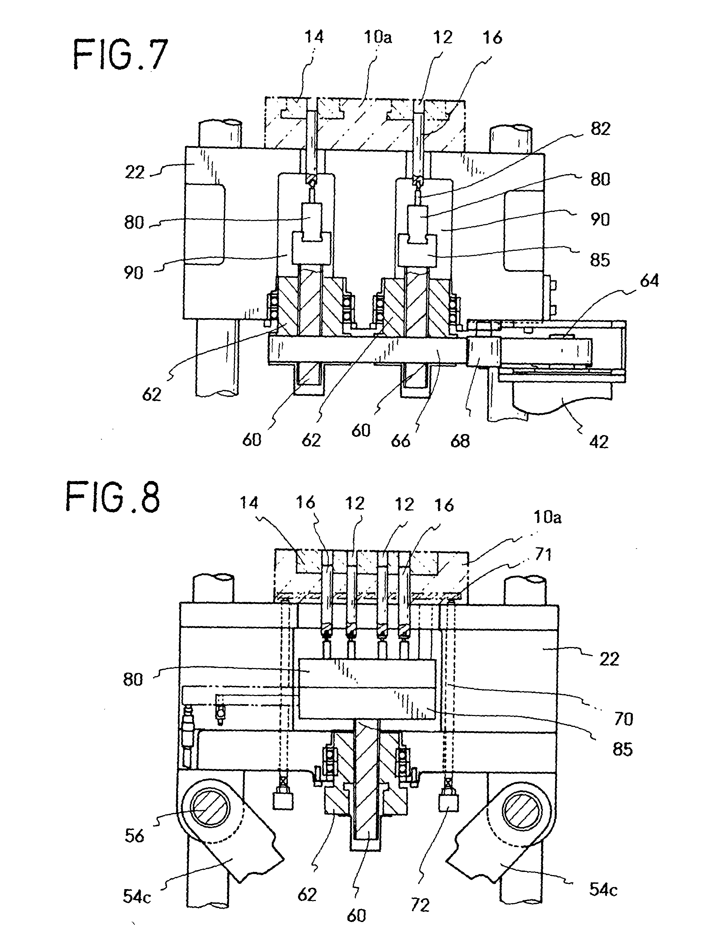

Figs. 7 and 8 shows the plunger driving mechanisms, which is driven by the servo motor 42. The plunger driving mechanisms are vertically moved together with the movable platen 22, which is vertically moved by the clamping mechanism. While the molding dies 10 clamps the members to be molded, the plunger driving mechanisms push the plungers in the pots so as to exert and send the melted resin. The movable platen 22 and the plunger driving mechanisms are shown in Figs. 7 and 8.

The lower die 10a is fixed to the movable platen 22. The lower die 10a has the pots 12 and the chases 14, each of which has setting positions (cavities) in each of which the member to be molded is set. Each plunger 16 is vertically slidably provided in each pot 12.

The lower die 10a has a couple of the chases 14 so as to simultaneously mold four lead frames. Thus, the plunger driving mechanism is provided for each chase 14.

In the multi-pot (plunger) type molding machine, each chase has a plurality of pots 12, and the plungers 16 are respectively provided in the pots 12 of each chase 14, so all the plungers 16 are simultaneously pushed to send the melted resin from the pots 12 to the cavities.

The pressure equalizing units 80 act to equalize the resin pressure in each pot 12 even if amount of the resin tablets are not equal. The pressure equalizing units 80 are shown in Figs. 7 and 8. The pressure equalizing units 80 equalize the resin pressure in each pot 12 by oil pressure. The plunger 16 are respectively supported by the piston rods 82, which are projected upward from the pressure equalizing units 80.

The plungers are vertically moved by vertically moving the pressure equalizing units 80, which support the plungers 16. A couple of the pressure equalizing units 80 are provided for each chase 14 (see Fig. 7).

To vertically move the plungers 16, there are downwardly extended screw shafts 60 from bottom faces of the pressure equalizing units 80, nuts 62 are respectively screwed with the screw shafts 60, and the servo motor 42 rotates the nuts 62. With this structure, the pressure equalizing units 80 can be vertically moved together with the plungers 16.

A belt 66 engages an output shaft 64 of the servo motor 42 with the nuts 62 to connect the servo motor 42 with the nuts 62. A tension roller 68 applies proper tension to the belt 66. A planar arrangement of the belt 66, the output shaft 66 and the nuts 62 is shown in Fig. 6.

As shown in Figs. 7 and 8, the screw shaft 60 are vertically moved by rotating the nuts 62 by the servo motor 42, so that the plungers 16 can be vertically moved together with the pressure equalizing units 80.

After the clamping mechanism clamps the lead frames, the plungers 16 are moved upward by the servo motor 42 so as to send the melted resin from the pots 12 to the cavities in the molding dies 10.

In the present embodiment, the plunger driving mechanisms, each of which comprises the screw shaft 60, the nut 62, etc., are provided for each chase 14. By providing the plunger driving mechanisms for each chase 14, the melted resin can be securely send into each chase 14. If the plungers 16 of each chase 14 are moved by one screw shaft 60, driving force of the screw shaft 60 unevenly transmitted to the plungers 16, so that desired molding cannot be executed in the both chases 14. On the other hand, in the present embodiment, desired molding can be securely executed even if one of the chases 14 is used or different products are molded in each chase 14. The nuts 62 are commonly rotated by the servo motor 42, but they may be rotated by servo motors respectively. And a couple of hydraulic systems may be provided for each pressure equalizing units 80.

Note that, ejector rods 70 are shown in Fig. 8. The ejector rods 70 act to project ejector pins from inner faces of the cavities when the molding dies 10 are opened. The ejector rods 70 are vertically pierced through the movable platen 22. When the molding dies 10 are opened, upper ends of the ejector rods 70 come into contact with a bottom face of an ejector pin plate 71; lower ends of the ejector rods 70 come into contact with a rod plate 72, which is fixed at a prescribed height when the movable platen 22 is moved downward; and the ejector rods 70 is pushed upward when the movable platen 22 is further moved downward, so that the ejector pins are pushed upward together with the ejector pin plate 71.

### (Exchanging Mechanism of The Pressure Equalizing Unit)

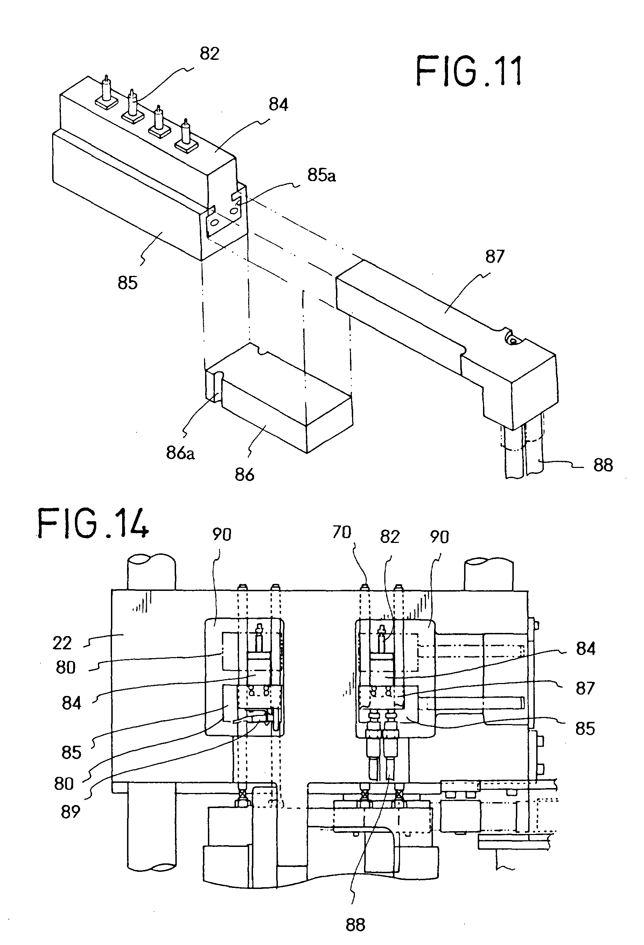

Fig. 9 is a sectional view of the pressure equalizing unit 80; Fig. 10 is a perspective view of the pressure equalizing unit 80; Fig. 11 is an exploded perspective view of the pressure equalizing unit 80.

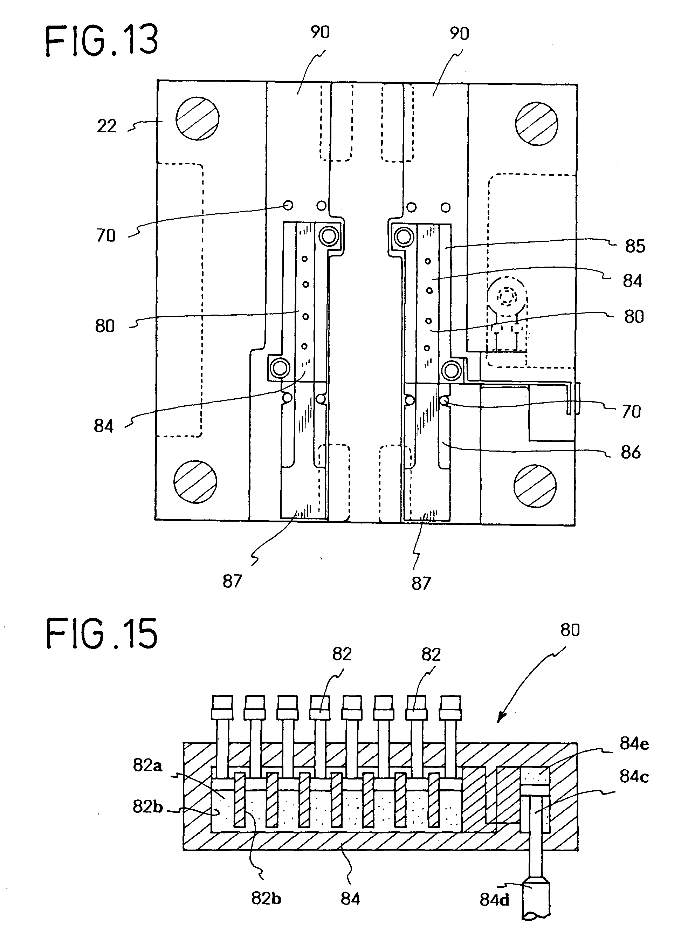

As described above, the pressure equalizing units 80 employ oil pressure to equalize the resin pressure in each pots 12. In Fig. 9, an oil is introduced into a unit block 84. There are formed a plurality of cylinders 82b in the unit block 84. The piston heads 82a are respectively slidably provided in the cylinders 82b. An inner structure of the unit block 84 is shown in Fig. 12, which shows that the cylinders 82b are mutually communicated. Since the oil in the cylinders 82b are mutually communicated, the plungers 16 can be pushed by even force when the plunger driving mechanisms push the pressure equalizing units 80 upward.

The pressure equalizing units 80 is designed to correspond an arrangement of the pots 12 in the molding dies 10. Thus, the pressure equalizing units 80 must be exchanged together with the chases 14 of the molding dies 10 when molded products are changed. Since the pressure equalizing units 80 are provided under the plungers 16 and in the movable platen 22, it is very troublesome for the conventional molding machine to exchange the pressure equalizing units.

In the present embodiment, the pressure equalizing units 80 can be attached into and detached from the movable platen 22 without disassembling the pressure equalizing units 80, so that they can be exchange easily.

The front view of the movable platen 22 is shown in Figs. 4 and 7. Unit holes 90, which are through-holes in the present embodiment, are bored, in the back and forth direction, in the movable platen 22. The pressure equalizing units 80 can be respectively inserted in the unit holes 90 from front ends thereof. The unit holes 90 must be opened at least in a front end face of the movable platen 22.

In each unit hole 90, a unit plate 85 for attaching and detaching the pressure equalizing unit 80 is arranged in the longitudinal direction of the unit hole 90, and the unit plate 85 is fixed to an upper end of the screw shaft 60. The pressure equalizing units 80 are capable of vertically moving in the unit holes 90, so the unit holes 90 have enough spaces in the vertical direction.

To correctly set the pressure equalizing unit 80 on each unit plate 85, the unit block 84 has grooves 84a in outer side faces; the unit block 84 can be attached to the unit plate 85 by engaging the grooves 84a with a T-slot 85a of the unit plate 85. The state of attaching the unit block 84 to the unit plate 85 is shown in Fig. 10.

The oil must be introduced into the unit block 84, and the unit block 84 must be fixed to the unit plate 85, so there is fixed a fixing bracket 86 at a front end of the unit plate 85, and there is fixed a communicating bracket 87 at a front end of the unit block 84. A relationship between the fixing bracket 86 and the communicating bracket 87 is shown in Fig. 11. The fixing bracket 86 is merely fixed to the front end of the unit plate 85; the communicating bracket 87 is communicated with oil holes 84b of the unit block 84 and fixed thereto. To attach the unit block 84 to the unit plate 85, firstly the communicating bracket 87 is fixed to the unit block 84, then the unit block 84 is fitted into the T-slot 85a of the unit plate 85.

By fitting the unit block 84 in the unit plate 85, the position of the unit block 84, in the width direction and the vertical direction, is defined. To define positions of the communicating bracket 87 and the unit block 84, firstly the unit block 84 is attached to the unit plate 85, then a positioning pin 87a is inserted in the brackets 86 and 87. A sensor 89 judges if the unit block 84 is correctly set or not by detecting the positioning pin 87a. Oil pipes 88 are connected with the communicating bracket 87 by couplers so as to communicate the pressure equalizing unit 80 with the hydraulic system H. Note that, rod grooves 86a, through which the ejector rods 70 pass, are formed in the fixing bracket 86 as shown in Fig. 11.

A planar arrangement of the unit blocks 84, the unit plates 85, the fixing brackets 86 and the communicating brackets 87 in the movable platen 22 is shown in Fig. 13. The unit blocks 84 are located in a center part of the movable platen 22 and respectively attached on the unit plates 85. The communicating brackets 87 are respectively fixed to the front ends of the unit blocks 84, and the unit blocks 84 are located at described positions. Fig. 14 is a side view of the pressure equalizing units 80, which are attached in the movable platen 22. The pressure equalizing units 80 at lower positions are drawn by solid lines; the pressure equalizing units 80 at upper positions are drawn by two-dot chain lines.

The sensor 89 detects the positioning pin 87a to judge if the communicating bracket 87 and the pressure equalizing unit 80 is correctly set in the unit hole 90 or not. If the unit block 84 is not located at a correct position, the molding dies 10 will be damaged, so the sensor 89 is provided to prevent the molding dies 10 from damaging.

Note that, the pressure equalizing units 80 are completely attached by joining to the plungers 16 of the molding dies 10. When the pressure equalizing units 80 are attached and detached, the plungers 16 are disconnected from the piston rods 82. The pressure equializing units 80 and the plungers 16 are connected by the steps of: setting the pressure equalizing units 80 at prescribed positions in the movable platen 22; setting the lower die 10a at a prescribed position in the movable platen 22; and inserting the plungers 16 into each pot 12 from an upper side.

As shown in Fig. 7, the plungers 16 are respectively connected with upper ends of the piston rods 82 of the pressure equalizing units 80. The connecting structure has been disclosed in Japanese Utility Model Kokai Gazette No. 3-26519. As shown in Fig. 9, there is provided a holder 92 for keying the plunger 18 with the upper end of the piston rod 82 at the upper end of the piston rod 82. The lower end of the plunger 18 is inserted into the holder 92, then the plunger 18 is rotated about its own axis, so that the plunger 16 is connected with the piston rod 82, and the plunger 16 cannot move in the axial direction. To disconnect the plunger 16 from the holder 92, the plunger 16 is rotated in the reverse direction, then the key connection therebetween is disconnected, so that the plunger 16 can be pulled out upward. When the plungers 16 are connected with or disconnected from the piston rods 82, the pressure equalizing units 80 are moved to the upper positions to project the upper ends of the plungers 16 from the pots 12.

Since the plungers 16 can be easily connected with and disconnected from the piston rods 82 of the pressure equalizing units 80, the pressure equalizing units 80 can be easily attached into the movable platen 22 via the unit holes 90, which are opened in the front face of the movable platen 22.

Note that, the movable platen 22 is formed relatively thick so as to have enough toughness and not to warp itself, but its weight can be reduced by forming the unit holes 90. The pressure equalizing units 80 are provided in the movable platen 22 by properly using the inner spaces of the unit holes 90.

The pressure equalizing units 80 are communicated with the hydraulic system H, which is located outside of the unit blocks 84, so as to adjust the oil pressure. By the adjustable hydraulic system H, exerting force of the plungers 16, which sends the melted resin while molding, can be adjusted. In Fig. 15, a resin pressure adjusting mechanism is assembled in the unit block 84 of the pressure equalizing unit 80. Namely, the unit block 84 includes: the cylinders 82, which are mutually communicated, and in each of which the piston head 82a with the piston rod 82 is vertically moved; an adjusting cylinder 84e communicating with all of the cylinders 82b; and an adjusting piston 84c, which is capable of vertically moving in the adjusting cylinder 84e. The oil pressure in all of the cylinders 82b can be adjusted by moving the adjusting piston 84c by an electric motor, oil pressure, etc.. By adjusting the oil pressure in the cylinders 82b, the resin pressure for molding the members to be molded can be adjusted. In the present embodiment, the adjusting piston 84c is pushed by a rod 84b, which is driven by the electric motor, the oil pressure, etc., so the pressure equalizing unit 80 can be easily exchanged.

In the present embodiment, the clamping mechanism and the plunger driving mechanisms are driven by the servo motors; the pressure equalizing units 80 are driven by the hydraulic system H. With this structure, the resin molding machine has advantages of the electric press mechanism and the hydraulic system, so the best molding conditions can be realized in the molding machine. Namely, since the clamping mechanism and the plunger driving mechanisms are driven by the electric motors, they can be precisely driven at high speed, and shock, which occurs when the clamping force or driving speed is changed, can be prevented; since the pressure equalizing units 80 are driven by the hydraulic system, the resin pressure in all the pots 12 can be perfectly equal.

At the beginning of filling the melted resin in the cavities, the pressure equalizing units 80 applies high pressure so as to quickly melt the resin tablets, so that resin speed in gates of the cavities can be properly controlled. Slightly before filling up cavities, the resin pressure is reduced to prescribed lower pressure for precise molding, so that water hammer (liquid hammer) by the melted resin and forming thin flashes can be prevented.

Generally, the equalized resin pressure applied by the pressure equalizing units 80 is lower than main transfer pressure. To avoid wire deformation of the semiconductor devices, forming voids, etc., some molding conditions, e.g., the driving force applying to the pressure equalizing units 80, timing of changing pressure, are defined according to products. The best conditions are known by experimental molding.

The resin molding machine of the present embodiment can be precisely controlled in the step of removing the molded products from the molding dies 10.

The molded products are removed from the molding dies 10 by projecting the ejector pins from the inner faces of the cavities. When the ejector pins remove the molded products, resin culls, which are solidified in the pots 12, are simultaneously pushed out from the pots 12 by the plungers 16.

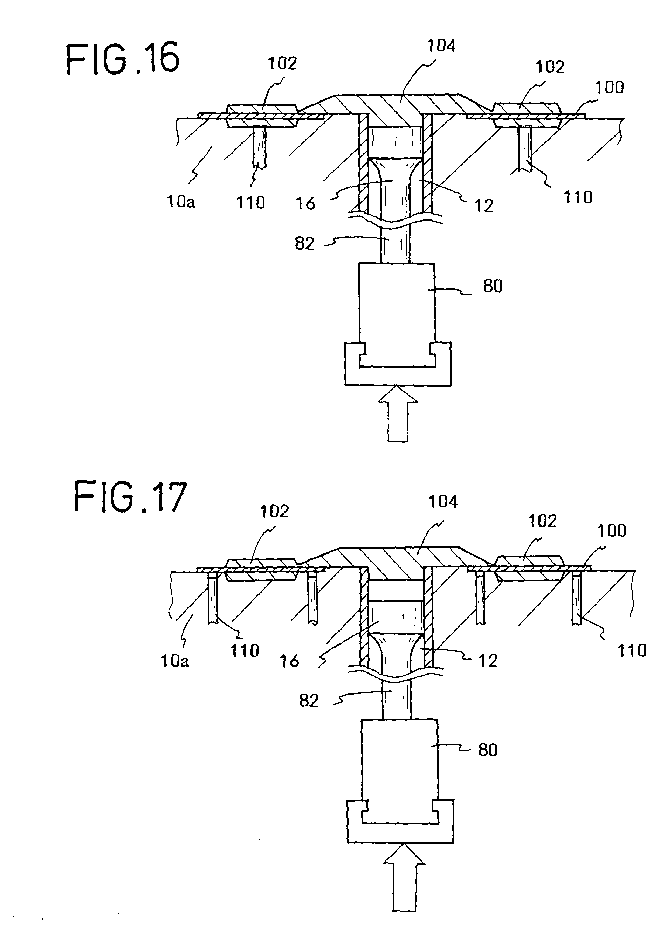

The ejecting action is shown in Fig. 16. The molded products 102, which include the lead frames 100, are ejected by the ejector pins 110; the resin cull 104 is ejected by the plunger 16.

When the molding is completed, a small amount of resin is left in the pot 12, and the upper end of the plunger 16 sticks to the resin left. In Fig. 16, the upper end of the plunger 16 sticks to a lower end of the resin cull 104, which is still left in the pot 12. To eject the resin cull 104 from the pot 12, the plunger 16 is once moved downward to separate away from the resin cull 104, then the plunger 16 is moved upward to eject the resin cull 104. The movement of the plunger 16 can be controlled by the servo motor. Before moving the plunger 16 downward, the position (upper position) at which the upper end of the plunger 16 contacts a bottom face of the resin cull 104 is stored. To eject the resin cull 104, the plunger 16 is moved upward to the upper position, then the plunger 16 is further moved upward so as to eject the resin cull 104 together with the molded products 102. Note that, the plunger driving mechanisms moves the plungers 16 by vertically moving the pressure equalizing units 80, so storing the upper position of the plungers 16 is equal to store an upper position of the pressure equalizing units 80.

When the plungers 16 are once moved downward, the clamping mechanism simultaneously opens the molding dies 10. When the molding dies 10 are almost fully opened, the opening action is once stopped, then the unloader enters the space between the lower die 10a and the upper die 10b. In this state, the plungers 16 return to the upper positions, then the lower die 10a is further moved downward until reaching the lowest position so as to project the ejector pins 110 from the inner bottom faces of the cavities and to project the plungers 16 from the pots 12, so that the molded products 102 and the resin culls 104 are ejected from the lower die 10a.

The plungers 16 are driven by the servo motor, so they can be precisely controlled. Further, the clamping mechanism is also driven by the electric motor, so the projection of the ejector pins 110 can be perfectly synchronized with ejecting the resin culls 104 by the plungers 16. Especially, in the present embodiment, the pressure equalizing units 80 equalize the resin pressure by the oil pressure, so the upper position of each plunger 16 is defined according to amount of the solidified resin, which has been left in each pot 12, when the plungers 16 are returned to the upper positions.

In the conventional molding machine having the spring pressure equalizing unit, if the amount of the solidified resin left in the pots are not equal, degree of compressing springs is different in each pot, so that ejecting force of each plunger, which ejects the resin cull, is not fixed. By the uneven ejecting force, the resin culls cannot be ejected simultaneously. On the other hand, in the present embodiment, since the pressure equalizing units 80 are driven by the oil pressure, the ejecting force in the pots 12 can be perfectly equal without reference to the amount of the resin left in the pots 12, so that the resin culls 104 in all the pots 12 can be ejected simultaneously.

If the timing of ejecting the resin culls 104 by the plungers 16 and the timing of ejecting the molded products 102 by the ejector pins 110 are shifted, the solidified resin is accidentally broken at positions other than resin gates, so that disused resin is left on the molded product. Namely, it is very important to simultaneously drive the plungers 16 and the ejector pins 110.

The unloader, which enters the space between the lower die 10a and the upper die 10b, has a jig for pressing the resin culls 104 and the molded products 102 so as to press the resin culls 104 and the molded products 102 when they are ejected from the lower die 10a. In the case that the amount of the resin left in each pot 12 is different each other, timing of beginning the ejection of all the plungers 16 is not shifted, but timing of completing the ejection of some plungers 16 is shifted. Some plungers 16 in empty pots 16, from which the solidified resin have been ejected, will be accidentally pushed out from the pots 12 unless the unloader has the jig.

To eject the molded products 102 from the cavities by the ejector pins 110, the ejector pins 110 push molded sections of the molded products 102. In the case that the molded sections are very thin, the ejector pins 110 cannot push the thin molded sections, so the ejector pins 110 push the lead frame sections 100 of the products 102.

In Fig. 17, the ejector pins 110 push the lead frame sections 100 to eject the molded products 102 from the lower die 10a. The plungers 16 and the ejector pins 110 are driven by the same mechanisms described above. Fig. 17 show a state in which the plunger 16 is once moved downward to separate the resin cull 104 away from the plunger 16.

To eject the molded products 100 having the thin molded sections by pushing the molded sections with the ejector pins 110, stand-by positions of the upper ends of the ejector pins 110 with respect to the molded products 100 is slight distance, e.g., 0.05 - 0.1 mm, under bottom faces of the molded sections. With this structure, the ejector pins 110 must be controlled precisely, further the plungers 16 are simultaneously controlled with the ejector pins 110. Thus, the ejecting step must be executed very precisely. The precise control can be securely executed by the motor driven clamping mechanism and the motor driven plunger driving mechanisms. Additionally, the hydraulic pressure equalizing units 80 can assist the precise control.

In the resin molding machine of the present embodiment, the clamping mechanism and the transfer mechanism are driven by the electric motors. The exchanging mechanism of the pressure equalizing units, in which the pressure equalizing units 80 can be inserted in the movable platen 22 via the side face thereof, can be employed to the resin molding machines, whose clamping mechanisms and transfer mechanisms are driven by hydraulic systems.

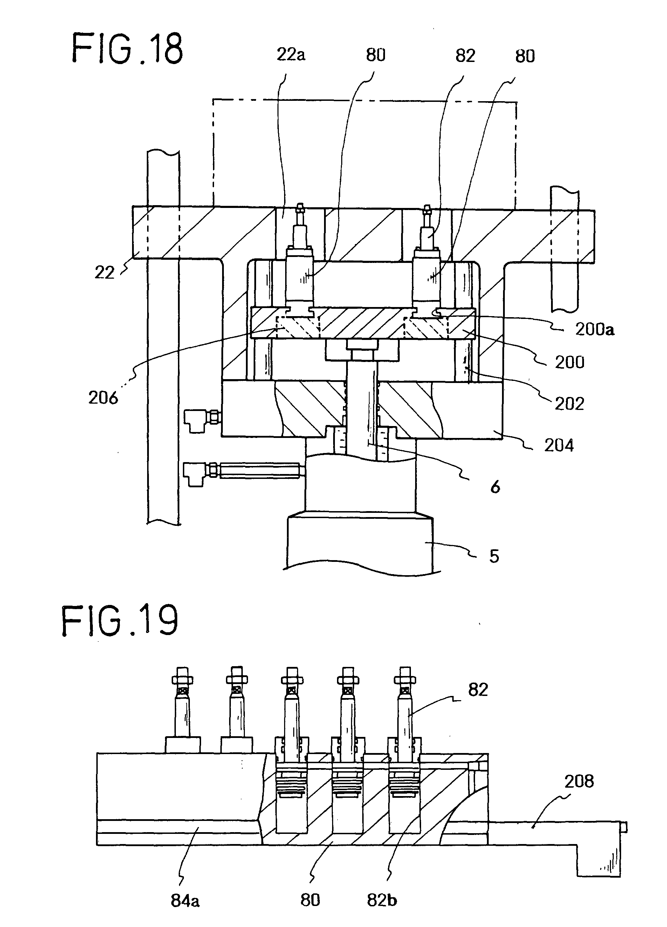

The resin molding machine, whose clamping mechanism and transfer mechanism are driven by the hydraulic system, is shown in Fig. 18, which shows front views of the pressure equalizing units 80. A unit plate 200 is provided to an upper end of the transfer piston 6. The pressure equalizing units 80 are supported and driven by the unit plate 200. Guide rods 202 guide the vertical movement of the unit plate 200. A cover 204 encloses the transfer piston 6 and covers a bottom face of the unit plate 200. The cover 204 makes a space in which the unit plate 200 moves vertically. Note that, Fig. 18 shows a state in which the unit plate 200 is located at a mid position of its vertical stroke.

In the present embodiment, the unit plate 200 supports two pressure equalizing units 80, as well as the forementioned embodiment, so as to respectively provide the pressure equalizing units 80 for each chase, which is assembled in the movable platen 22. There are bored through-holes 22a for connecting the piston rods 82 of the pressure equalizing units 80 with the plungers in the movable platen 22. To attach or detach the pressure equalizing units 80, the unit plate 200 is moved to the lowest position so as to locate the piston rods 82, which are upwardly extended from the pressure equalizing units 80, under the through-holes 22.

To fix the pressure equalizing units 80 to the unit plate 200, firstly attaching blocks 206 are fixed to the unit plate 200, then joint blocks 208 (see Fig. 19), each of which is attached to each pressure equalizing unit 80, are respectively fixed to the attaching blocks 206. Fig. 19 shows a state in which the joint block 208 is attached to the pressure equalizing unit 80. The oil pipes are connected to the joint blocks 208 so as to communicate the pressure equalizing units 80 with the hydraulic system.

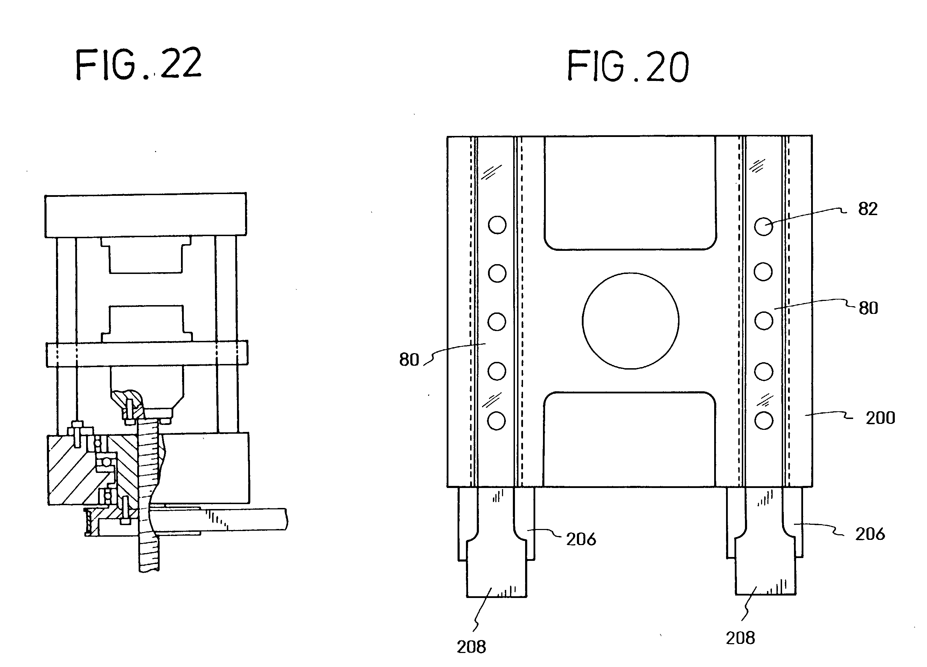

Fig. 20 is a plan view in which the pressure equalizing units 80 are attached to the unit plate 200. The attaching blocks 206 are fixed to a front end of the unit plate 200. The pressure equalizing unit 80 is attached to the unit plate 200 by the steps of: engaging grooves 84a, which are formed in both side faces of the pressure equalizing unit 80, with a T-slot 200a of the unit plate 200; inserting the pressure equalizing unit 80 in the unit plate 200; making contact an inner face of the L-shaped joint block 208 with a front end of the attaching block 206 so as to correctly position; and fixing the joint block 208 to the attaching block 206. After the pressure equalizing units 80 are attached, the oil pipes are connected with the joint block 208, so that the pressure equalizing unit 80 can be communicated with the hydraulic system.

After the pressure equalizing units 80 are attached to the unit plate 200, the plungers are respectively connected with the piston rods 82 by the manner as well as the forementioned embodiment.

In the resin molding machine whose clamping mechanism and transfer mechanism are driven by the hydraulic system, the pressure equalizing unit 80 can be attached into and detached from the movable platen 22 through the side face thereof as well as the resin molding machine whose clamping mechanism and transfer mechanism are driven by the electric motors, so that the pressure equalizing mechanisms 80 can be easily exchanged when the molded products are changed, etc..

The invention may be embodied in other specific forms without departing from the essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A resin moulding machine,
comprising:
a clamping mechanism including an upper die (10b) and a lower die (10a), the lower die (10a) being movable to clamp a member to be moulded;
plungers (16) acting on melted resin in pots (12) to feed said resin when said member is moulded, the pots (12) being formed in the lower die (10a) ;
a plunger driving mechanism for moving the plungers (16) from a lower position to a higher position to feed the melted resin;
a pressure equalizing unit (80) whereby the same pressure is applied to each of said plungers (16),
an electric motor (40) driving said clamping mechanism and said plunger driving mechanism, and
for each pot (12), one or more ejector pins (110) for ejecting the moulded member;
**characterised in that**:
the pressure equalizing unit (80) is controlled by a hydraulic system;
the plungers (16) and the ejector pins (110) are driven such that, subsequent to moulding, the plungers (16) are lowered from their higher positions to disengage from the solidified resin cull in the pots (12), and thereafter the plungers (16) and ejector pins (110) are simultaneously raised whereby the moulded members and the resin cull are ejected from the lower die (10a) and from the pots (12); and
an unloader is provided for entering the space between the upper die (10b) and the lower die (10a) subsequent to moulding and arranged to press down on the moulded members as they are ejected by the ejector pins (110) and the plungers (16).

2. The resin moulding machine according to claim 1 wherein the clamping mechanism includes a toggle mechanism which connects a base (24) with a movable platen (22).

3. The resin moulding machine according to claim 2, wherein said toggle mechanism includes:
a rotatable screw shaft (44) extending vertically from the centre of the base (24);
a nut (52) screwed on the screw shaft (44);
a link mechanism connecting the base (24) with the movable platen (22) through engagement with the nut (52); and
an electric motor (40) for rotating the screw shaft (44) about its central axis.

4. The resin moulding machine according to claim 3, wherein said link mechanism includes:
a first link piece (54a) one end of which is engaged with said nut (52);
a second link piece (54b) one end of which is pivotably connected to the base (24); and
a third link piece (54c) one end of which is pivotably connected to the movable platen (22),
wherein the other end of the second link piece (54b) is pivotably connected to the other end of the third link piece (54c), and the other end of the first link piece (54a) is pivotably connected to the second link piece (54b) at a position intermediate the length of the second link piece (54b).

5. The resin moulding machine according to any one of claims 1 to 4
wherein said plunger driving mechanism includes:
a screw shaft (6) holding the pressure equalizing unit (80), which is provided under the pots (12) of the lower die (10a) ;
a nut (62) screwed on said screw shaft (60); and
an electric motor (42) for rotating said nut (62) whereby the screw shaft (60) is moved vertically.

6. The resin moulding machine according to any one of claims 1 to 5 wherein said clamping mechanism further includes a movable platen (22),
the movable platen (22) has a unit hole (90) therein which opens in a side face of the movable platen (22) to enable the pressure equalizing unit (80) to move vertically when the member is moulded, the pressure equalising unit (80) being located in the unit hole (90) and held therein by the plunger driving mechanism;
the pressure equalizing unit (80) is movable in the unit hole (90) in the longitudinal direction thereof, and
the pressure equalizing unit (80) can be pulled out via the open end of the unit hole (90).

7. The resin moulding machine according to any one of claims 1 to 6,
wherein the plunger driving mechanism includes a unit plate (85) for locating the pressure equalizing unit (80) longitudinally in the unit hole (90);
the pressure equalizing unit (80) is slidably engaged with the unit plate (85) to enable movement of the pressure equalizing unit (80) longitudinally of the unit hole (90), and
the pressure equalizing unit (80) can be engaged with and disengaged from the unit plate (85) via the open end of the unit hole (90).

8. The resin moulding machine according to claim 7, wherein the pressure equalizing unit (80) includes a unit block (84) having a plurality of cylinders (82b) in each of which is provided a movable piston head (82a), which corresponds to each plunger (16), and
wherein said unit block (84) communicates with said hydraulic system, whereby oil chambers of all the cylinders (82b) are mutually interconnected.

9. The resin moulding machine according to claim 8, wherein the unit block (84) incorporates an adjusting piston (84c) capable of adjusting the pressure of oil supplied to the piston heads (82a).

10. The resin moulding machine according to claim 8 or claim 9, further comprising:
a fixing bracket (86) provided in a front end section of the unit plate (85); and
a communicating bracket (87) provided in a front end section of the unit block (84), said communicating bracket (87) communicating with the hydraulic system,
wherein a position of said communicating bracket (87) with respect to said fixing bracket (86) is defined to define a position of said pressure equalizing unit (80).

11. The resin moulding machine according to any one of claims 8 to 10,
wherein upper end sections of the piston heads (82a) are respectively capable of keying with lower end sections of the plungers (16) by rotating the plungers (16) about their own axes.

## Patentansprüche

1. Harzformmaschine, umfassend
einen Klemmmechanismus, der eine obere Formhälfte (10b) und eine untere Formhälfte (10a) umfasst wobei die untere Formhälfte (10a) beweglich ist, um ein zu formendes Element festzuklemmen;
Kolben (16), die auf geschmolzenes Harz in Töpfen (12) wirken, um das Harz zuzuführen, wenn das Element geformt wird, wobei die Töpfe (12) in der unteren Formhälfte (10a) ausgebildet sind;
einen Kolben-Antriebsmechanismus, um die Kolben (16) aus einer unteren Position in eine höhere Position zu bewegen, um das geschmolzene Harz zuzuführen;
eine Druckausgleichseinheit (80), durch die auf jeden der Kolben (16) der gleiche Druck ausgeübt wird,
einen Elektromotor (40), der den Klemmmechanismus und den Kolben-Antriebsmechanismus antreibt, und
für jeden Topf (12) einen oder mehrere Auswerferstifte (110) zum Auswerfen des geformten Elements;
**dadurch gekennzeichnet, dass** die Druckausgleichseinheit (80) durch ein Hydrauliksystem gesteuert wird;
die Kolben (16) und die Auswerferstifte (110) so angetrieben werden, dass nach dem Formen die Kolben (16) aus ihren höheren Positionen gesenkt werden, um von den verfestigen Harz-Angussstutzen in den Töpfen (12) außer Eingriff zu kommen, und daraufhin die Kolben (16) und Auswerferstifte (110) gleichzeitig gehoben werden, wodurch die geformten Elemente und der Harz-Angussstutzen aus der unteren Formhälfte (10a) und aus den Töpfen (12) ausgeworfen werden; und
ein Entlader vorgesehen ist, um nach dem Formen in den Raum zwischen der oberen Formhälfte (10b) und der unteren Formhälfte (10a) einzutreten, und so angeordnet ist, dass er auf die geformten Elemente drückt, wenn sie von den Auswerferstiften (110) und den Kolben (16) ausgeworfen werden.

2. Harzformmaschine nach Anspruch 1, worin der Klemmmechanismus einen Knebelmechanismus umfasst, der eine Basis (24) mit einer beweglichen Traverse (22) verbindet.

3. Harzformmaschine nach Anspruch 2, worin der Knebelmechanismus umfasst:
eine drehbare Schraubenwelle (44), die sich von der Mitte der Basis (24) vertikal erstreckt;
eine Mutter (52), die auf die Schraubenwelle (44) geschraubt ist;
einen Verbindungsmechanismus, der die Basis (24) durch Ineinandergreifen mit der Mutter (52) mit der beweglichen Traverse (22) verbindet; und
einen Elektromotor (40), um die Schraubenwelle (44) um ihre Mittelachse zu drehen.

4. Harzformmaschine nach Anspruch 3, worin der Verbindungsmechanismus umfasst:
ein erstes Verbindungsstück (54a), das sich an einem Ende mit der Mutter (52) in Eingriff befindet;
ein zweites Verbindungsstück (54b), das an einem Ende gelenkig mit der Basis (24) verbunden ist; und
ein drittes Verbindungsstück (54c), das an einem Ende gelenkig mit der beweglichen Traverse (22) verbunden ist,
worin das andere Ende des zweiten Verbindungsstücks (54b) gelenkig mit dem anderen Ende des dritten Verbindungsstücks (54c) verbunden ist und das andere Ende des ersten Verbindungsstücks (54a) in einer Position auf Hälfte der Länge des zweiten Verbindungsstücks (54b) gelenkig mit dem zweiten Verbindungsstück (54b) verbunden ist.

5. Harzformmaschine nach einem der Ansprüche 1 bis 4,
worin der Kolben-Antriebsmechanismus umfasst:
eine Schraubenwelle (6), die die Druckausgleichseinheit (80) hält, die unter den Töpfen (12) der unteren Formhälfte (10a) vorgesehen ist;
eine Mutter (62), die auf die Schraubenwelle (60) geschraubt ist; und
einen Elektromotor (42) zum Drehen der Mutter (62), wodurch die Schraubenwelle (60) vertikal bewegt wird.

6. Harzformmaschine nach einem der Ansprüche 1 bis 5, worin der Klemmmechanismus weiters eine bewegliche Traverse (22) umfasst,
die bewegliche Traverse (22) ein Einheitsloch (90) darin aufweist, das sich in einer Seitenfläche der beweglichen Traverse (22) öffnet, um die vertikale Bewegung der Druckausgleichseinheit (80) zu ermöglichen, wenn das Element geformt wird, wobei die Druckausgleichseinheit (80) im Einheitsloch (90) angeordnet ist und durch den Kolben-Antriebsmechanismus darin gehalten wird;
die Druckausgleichseinheit (80) im Einheitsloch (90) in dessen Längsrichtung beweglich ist, und
die Druckausgleichseinheit (80) über das offene Ende des Einheitslochs (90) herausgezogen werden kann.

7. Harzformmaschine nach einem der Ansprüche 1 bis 6,
worin der Kolben-Antriebsmechanismus eine Einheitsplatte (85) umfasst, um die Druckausgleichseinheit (80) in Längsrichtung im Einheitsloch (90) anzuordnen;
die Druckausgleichseinheit (80) sich im Gleiteingriff mit der Einheitsplatte (85) befindet, um Bewegung der Druckausgleichseinheit (80) in Längsrichtung des Einheitslochs (90) zu ermöglichen, und
die Druckausgleichseinheit (80) über das offene Ende des Einheitslochs (90) mit der Einheitsplatte (85) in Eingriff und davon außer Eingriff gebracht werden kann.

8. Harzformungsmaschine nach Anspruch 7, worin die Druckausgleichseinheit (80) einen Einheitsblock (84) umfasst, der eine Vielzahl von Zylindern (82b) aufweist, in denen jeweils ein beweglicher Kolbenkopf (82a) vorgesehen ist, der jedem Kolben (16) entspricht, und
worin der Einheitsblock (84) mit dem Hydrauliksystem kommuniziert, wodurch Ölkammern aller Zylinder (82b) miteinander verbunden sind.

9. Harzformmaschine nach Anspruch 8, worin der Einheitsblock (84) einen Einstellkolben (84c) umfasst, mit dem der Druck von Öl eingestellt werden kann, das den Kolbenköpfen (82a) zugeführt wird.

10. Harzformmaschine nach Anspruch 8 oder 9, weiters umfassend:
eine Fixierklammer (86), die in einem vorderen Endabschnitt der Einheitsplatte (85) vorgesehen ist; und
eine kommunizierende Klammer (87), die in einem vorderen Endabschnitt des Einheitsblocks (84) vorgesehen ist, wobei die kommunizierende Klammer (87) mit dem Hydrauliksystem kommuniziert,
worin eine Position der kommunizierenden Klammer (87) in Bezug auf die Fixierklammer (86) so definiert ist, dass eine Position der Druckausgleichseinheit (80) definiert wird.

11. Harzformmaschine nach einem der Ansprüche 8 bis 10,
worin obere Endabschnitte der Kolbenköpfe (82a) jeweils in der Lage sind, sich mit unteren Endabschnitten der Kolben (16) zu verriegeln, indem die Kolben (16) um ihre eigenen Achsen gedreht werden.

## Revendications

1. Une machine pour le moulage de résine, comprenant:
un mécanisme de serrage comportant une matrice supérieure (10b) et une matrice inférieure (10a), la matrice inférieure (10a) pouvant se déplacer pour serrer un élément devant être moulé;
des plongeurs (16) agissant sur la résine moulée dans des creusets (12) pour amener ladite résine lorsque ledit élément est moulé, les creusets (12) étant formés dans la matrice inférieure (10a);
un mécanisme d'entraînement des plongeurs pour déplacer les plongeurs (16) depuis une position inférieure jusqu'à une position supérieure afin de faire avancer la résine fondue;
une unité d'égalisation de pression (80) par laquelle la même pression est appliquée à chacun desdits plongeurs (16),
un moteur électrique (40) entraînant ledit mécanisme de serrage et ledit mécanisme d'entraînement des plongeurs, et
pour chaque creuset (12), un ou plusieurs doigts éjecteurs (110) pour éjecter l'élément moulé;
**caractérisé en ce que**:
l'unité d'égalisation de pression (80) est commandée par un système hydraulique;
les plongeurs (16) et les doigts éjecteurs (110) sont entraînés de telle manière que, à la suite du moulage, les plongeurs (16) sont abaissés à partir de leurs positions les plus hautes pour se dégager du culot de résine solidifiée placé dans les creusets (12), après quoi les plongeurs (16) et les doigts éjecteurs (110) sont simultanément relevées de sorte que les éléments moulés et le culot de résine sont éjectés hors de la matrice inférieure (10a) et des creusets (12); et
un organe de déchargement est prévu pour pénétrer dans l'espace entre la matrice supérieure (10b) et la matrice inférieure (10a) à la suite du moulage et est disposé pour appuyer sur les éléments moulés au fur et à mesure qu'ils sont éjectés par les doigts éjecteurs (110) et les plongeurs (16).

2. La machine pour le moulage de résine selon la revendication 1, dans laquelle le mécanisme de serrage comprend un mécanisme à genouillère qui relie un socle (24) à une platine mobile (22).

3. La machine pour le moulage de résine selon la revendication 2, dans laquelle ledit mécanisme à genouillère comprend:
un arbre rotatif fileté (44) s'étendant verticalement à partir du centre du socle (24);
un écrou (52) vissé sur l'arbre fileté (44);
un mécanisme de liaison reliant le socle (24) au plateau mobile (22) par engagement avec l'écrou (52); et
un moteur électrique (40) pour faire tourner l'arbre fileté (44) autour de son axe central.

4. La machine pour le moulage de résine selon la revendication 3, dans laquelle ledit mécanisme de liaison comprend:
une première pièce de liaison (54a) dont une extrémité est engagée avec ledit écrou (52);
une seconde pièce de liaison (54b) dont une extrémité est reliée de manière pivotante au socle (24); et
une troisième pièce de liaison (54c) dont une extrémité est reliée de manière pivotante à la platine mobile (22),
dans laquelle l'autre extrémité de la seconde pièce de liaison (54b) est reliée de manière pivotante à l'autre extrémité de la troisième pièce de liaison (54c), et l'autre extrémité de la première pièce de liaison (54a) est reliée de manière pivotante à la seconde pièce de liaison (54b) au niveau d'une position intermédiaire à la longueur de la seconde pièce de liaison (54b).

5. La machine pour le moulage de résine selon l'une quelconque des revendications 1 à 4,
dans laquelle ledit mécanisme d'entraînement des plongeurs comprend:
un arbre fileté (6) maintenant l'unité d'égalisation de pression (80), laquelle est prévue sous les creusets (12) de la matrice inférieure (10a);
un écrou (62) vissé sur ledit arbre fileté (60); et
un moteur électrique (42) pour faire tourner ledit écrou (62) de sorte que l'arbre fileté (60) est déplacé verticalement.

6. La machine pour le moulage de résine selon l'une quelconque des revendications 1 à 5, dans laquelle ledit mécanisme de serrage comprend en outre une platine mobile (22),
la platine mobile (22) présente à l'intérieur un trou d'unité (90) qui débouche dans une face latérale de la platine mobile (22) pour permettre à l'unité d'égalisation de pression (80) de se déplacer verticalement lorsque l'élément est moulé, l'unité d'égalisation de pression (80) étant placée dans le trou d'unité (90) et maintenue à l'intérieur par le mécanisme d'entraînement des plongeurs;
l'unité d'égalisation de pression (80) est mobile dans le trou d'unité (90) dans sa direction longitudinale, et
l'unité d'égalisation de pression (80) peut être retirée à travers de l'extrémité ouverte du trou d'unité (90).

7. La machine pour le moulage de résine selon l'une quelconque des revendications 1 à 6,
dans laquelle le mécanisme d'entraînement des plongeurs comprend une plaque d'unité (85) pour placer l'unité d'égalisation de pression (80) de manière longitudinale dans le trou d'unité (90);
l'unité d'égalisation de pression (80) est engagée de manière coulissante avec la plaque d'unité (85) pour permettre le mouvement de l'unité d'égalisation de pression (80) de manière longitudinale au trou d'unité (90), et
l'unité d'égalisation de pression (80) peut être engagée avec la plaque d'unité (85) et dégagée de celle-ci à travers l'extrémité ouverte du trou d'unité (90).

8. La machine pour le moulage de résine selon la revendication 7, dans laquelle l'unité d'égalisation de pression (80) comprend un bloc d'unité (84) présentant une pluralité de vérins (82b) dans chacun desquels est prévue une tête de piston mobile (82a), laquelle correspond à chaque plongeur (16), et
dans laquelle ledit bloc d'unité (84) communique avec ledit système hydraulique, de sorte que les chambres à huile de tous les vérins (82b) communiquent mutuellement entre elles.

9. La machine pour le moulage de résine selon la revendication 8, dans laquelle le bloc d'unité (84) incorpore un piston de réglage (84c) susceptible de régler la pression de l'huile appliquée aux têtes de piston (82a).

10. La machine pour le moulage de résine selon la revendication 8 ou la revendication 9, comprenant en outre:
une console de fixation (86) prévue dans une section d'extrémité avant de la plaque d'unité (85); et
une console de communication (87) prévue dans une section d'extrémité avant du bloc d'unité (84), ladite console de communication (87) communiquant avec le système hydraulique,
dans laquelle une position de ladite console de communication (87) par rapport à ladite console de fixation (86) est définie de manière à définir une position de ladite unité d'égalisation de pression (80).

11. La machine pour le moulage de résine selon l'une quelconque des revendications 8 à 10,
dans laquelle des sections d'extrémité supérieure des tiges de piston (82a) sont respectivement susceptibles de se caler avec des sections d'extrémité inférieure des plongeurs (16) en faisant tourner les plongeurs (16) autour de leurs propres axes.
